# EUROPEAN PATENT APPLICATION

(11) **EP 1 162 816 A1**
(43) Date of publication of application: **12.12.2001**
(21) Application number: 00440170.9
(22) Date of filing: 09.06.2000
(51) Int. Cl.: H04M 11/06

(54) **Detection by a PBX of an incoming call from a modem**

(71) Applicant: ALCATEL, 75008 Paris (FR)
(72) Inventor: Penet, Xavier, 67400 Illkrich Graffenstaden (FR)
(74) Representative: Rausch, Gabriele, Dr.

(57) **Abstract**

The basic idea of the present invention consists of taking advantage of the compatibility of almost every modem to a specific protocol called AT or Hayes commands. According to the present invention, the AT-commands will be used to generate a code specifying that the far end telecommunications device which just dialed is a modem. Therefore, when the dialed telecommunications device is connected to a PBX, latter will have to recognize said code after which it will transfer automatically that call to this telecommunications device identified by the dialed extension phone number and being a modem. Then a telecommunications connection between both modem will be set up. Advantageously, it is then possible by using present invention to connect several different telecommunications devices on a PBX, all being identified by the same extension phone number like a telephone, a FAX and a modem. A PBX according to the present invention will be able to redirect automatically a call coming from a modem to a modem.

## Description

The present invention relates to a set up method for a telecommunications connection between a far end modem and a near modem as set forth in the preamble of claim 1, a far end modem containing a programming code and a private branch exchange PBX as set forth respectively in the preamble of claim 6 and 7.

Nowadays, very often is connected to a same trunk line of a PBX several telecommunications devices like a telephone, a FAX and a modem all identified by a same extension phone number. Therefore, it is the part of the PBX not only to recognize the extension phone number but also the characteristics of an incoming call dialed by a far end telecommunications device to be able to route that call to the correct near end telecommunications device connected to the PBX. When the far end telecommunications device is a telephone i.e. a voice call shall be set up between two telephones, the PBX shall route that call to a near end telecommunications device being a telephone and identified by said extension phone number. The same happens if the far end telecommunications device is a FAX or a modem.

In the case the call is fully digital, i.e. it is performed on an Integrated Service Digital network ISDN line, a specific protocol is used to identify the call as being a voice, a FAX or a data call, latter for a modem. That protocol may be transferred over the D-channel from the dialed ISDN line and will be recognized by the PBX.

But except in Germany, the digital world for telephone networks and specially subscriber lines did not widespread that much among other due to the high cost such migration implies. Most of the cases, subscribers are still connected through an analog line or the telecommunications device is not an upgraded digital one. This is particularly true in the USA. In the case of an analog line, the PBX is often set up such that per default the received incoming call will be transferred to a telephone identified by the dialed extension phone number. But before such transfer occurs, the PBX will sent to the far end telecommunications device some greetings enabling latter in the case it is a FAX to send some specific CNG tone (calling tone). This tone will be recognized by the PBX which will then transfer the call to the corresponding near end telecommunications device being a FAX.

Such method cannot be applied for a call performed by a modem. Indeed, a far end calling modem does not issue any tones whatsoever. A modem works backwards i.e. only when the near end called modem answers the phone, it will emit a tone. It exits nevertheless few alternatives to recognize a called dialed by a modem. One of them is the use of a distinctive ringing activated by the far end modem when dialing and characterizing latter as a modem. Such solution is only implemented on some networks in North America and will not really be spread over the world. Another alternative is given by the use of the so called V.8 protocol. But that protocol is not generalized on every modem and a detection procedure based over such protocol would take to much time i.e. about few seconds.

In WO98/12882 is disclosed a more general detection method concerning also data transmission over conventional analog network i.e. a call dialed by a modem. But there, the only explained solution is based on the use of specific Direct Inward Dialing DID, a way to differentiate on the PBX side, all the telecommunications devices identified by a same extension phone number. This implies that the user of the far end modem not only must know an extension phone number but also the corresponding DID of the near end modem he whishes to call, a quite cumbersome solution.

At last, PBX may be administered by a technician for a software upgrading, configuration like affecting new telephone lines, maintenance or metering. Very often, small and medium size enterprises owning a PBX will not have an in-house technician able to perform such task. This service is then offered by some external company. To avoid any cost of travelling, the technician of that company will perform such task remotely by setting up a connection with an internal modem of the PBX to be administered. But since such task has not to be done every time, it is not judicious to waste an extension phone number only to identify an internal modem of the PBX. Therefore, it is up to now still not rare that the remote technician will have to phone to some operator of that PBX, asking him to switch manually the corresponding line to which is connected the internal modem of that PBX. Only then, the technician will be able to set up a connection between his modem and that internal modem by dialing the corresponding extension phone number of that PBX. It is obvious, that such a solution is absolutely not satisfactory, among other while it still implies to keep a person as an operator of the PBX busy.

It is an object of the present invention to enable a fast and sure automation of a transfer by a PBX of a telecommunications call between a far end modem and a near end modem, latter being connected to said PBX.

This object is attained by a set up method for a telecommunications connection between a far end modem and a near end modem as claimed in claim 1, a far end modem and a PBX as claimed respectively in claim 6 and 7.

The basic idea of the present invention consists of taking advantage of the compatibility of almost every modem to a specific protocol called AT or Hayes commands. Usually, a modem while using such commands, will dial an extension phone number of a telecommunications device with which it wants to communicate i.e. exchange data. On an analog connection, the AT-command will be used to perform specific tones which shall be heard by the targeted telecommunications device. These tones will help e.g. to wake up the targeted telecommunications device being a modem.

According to the present invention, the AT-commands will also be used to generate a code specifying that the far end telecommunications device which just dialed is a modem. Therefore, when the dialed telecommunications device is connected to a PBX or a private automatic branch exchange (PBX being the more general term), latter will have to recognize said code after which it will transfer automatically that call to this telecommunications device identified by the dialed extension phone number and being a modem. Then a telecommunications connection between both modem will be set up.

Advantageously, it is then possible by using present invention to connect several different telecommunications devices on a PBX, all being identified by the same extension phone number like a telephone, a FAX and a modem. A PBX according to the present invention will be able to redirect automatically a call coming from a modem to a modem.

An embodiment according to the present invention is characterized that the signal which will identify the caller far end telecommunications device as being a modem is made of a dual tone multi-frequency DTMF signal. Such signal simple to generate, is particularly easy to detect without any error.

Any far end modem which will communicate with a modem connected to a PBX according to the present invention will have to be upgrade with a programming code generating such identification signal. In fact, this upgrade will often be performed on a personal computer associated to that far end modem and where an application handling that far end modem is installed. It is, therefore, a low cost investment for a big technical advantage, namely a full automation of the transfer of a call by a PBX to the right telecommunications device according to the identification of the caller.

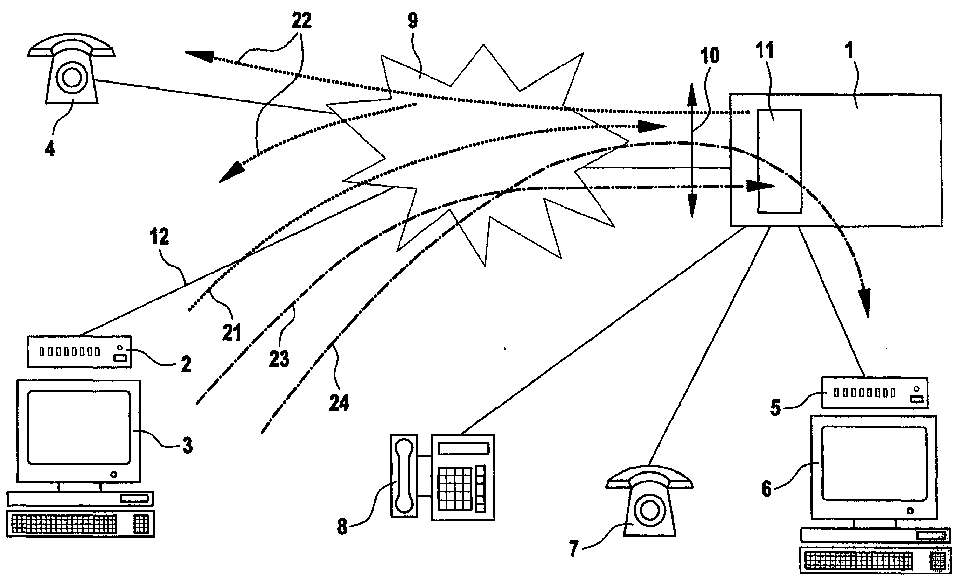

Further advantageous features of the invention are defined in the dependent claims and will become apparent from the following description and the drawing.

One embodiment of the invention will now be explained in more detail with reference to the accompanying drawing, in which:

The figure is a schematic view of a set up method for a telecommunications call according to the invention.

The telecommunications system shown on the figure consists of a network 9 to which are connected on one side a private branch exchange PBX 1 and on the other side telecommunications devices like a far end modem 2 and a telephone 4. The PBX 1 is a kind of a phone central office for companies to which will be connected all internal near end telecommunications devices like a near end modem 5, a near end plain old telephone POT 7 and a near end digital telephone 8. All incoming calls targeting a near end telecommunications device connected to the PBX 1 will reach that PBX 1 via a same trunk 10 before being routed or transferred by the PBX 1 to the right telecommunications device.

Nowadays and since already few decades this routing action by the PBX 1 is performed almost automatically. This means that dialing an extension phone number of a telecommunications device connected to the PBX 1 will be enough to set up a telecommunications connection with that device. The PBX is able to recognize the dialed extension phone number and to transfer it automatically to the right telecommunications device.

Since now it is common to affect to each of these extension phone number a plurality of devices like a telephone, a modem and a fax, the PBX 1 will have to be able to differentiate between all these devices in respective to the incoming call. This is reach specifically if the far end modem 2 wants to set up a telecommunications connection with the near end modem 5 by following the set up method according to the present invention.

The far end modem 2, after dialing 21 the extension phone number of the near end modem 5, will further specify itself as being a modem. This is perform by sending a specific code 23 by that far end modem 2 generated by AT or Hayes commands almost immediately after the dialed extension phone number. Such code which can be one or several specific tone like a dual tone multi-frequency DTMF signal and/or defining a specific number, will be received by a detector 11 of the PBX 1. That detector 11 will then recognize the code as being a kind of signature of a modem enabling the PBX 1 to transfer the telecommunications connection to the right near end telecommunications device being the near end modem 5.

Usually, it may be advantageous that the PBX 1 treats any incoming call per default as a voice call. Therefore, after receiving a new incoming call, the PBX 1 will then sends back some greetings 22 in form of a short welcome message. It is during that time that the far end modem 2 will have to send its specific code so to characterize itself as being a modem. Only if the PBX 1 will detect with its detector 11 such code during some time interval used to send the greetings, it will not transferred the incoming call to the telephone 7 corresponding to the dialed extension phone number but 24 to the near end modem 5. In that case, a telecommunications connection between both modems is set up. The detector 11 may work in a similar way as when detecting direct inward signaling access DISA.

Such kind of telecommunications connection can be fully set up automatically between the far end modem 2 and the near end modem 5 via the PBX 1 thus allowing afterwards a transfer of data between a computer like a PC 3 related to the far end modem 2 and another computer like a PC 6 related to the near end modem 5.

Advantageously, the present method may be used to administer remotely the PBX 1. Indeed, the near end modem 5 may be an interne modem of the PBX 1. In that case, a specialist may be able after setting up a telecommunications connection between its far end modem 2 and the interne near end modem 5 of the PBX 1 to have an access directly on data of the PBX 1 itself. This will permit him to perform some remote administration, metering, upgrading of a software or setting of new telephone lines on that PBX 1.

A far end modem like 2, to be able to send a signal to identify itself as being a modem according to the present invention needs only to be upgraded with a specific programming code. Often, this upgrade will be performed on a personal computer PC associated to that far end modem i.e. where latter is located. That PC will contain some application handling that far end modem. And the upgrade may then concern only a part of that application, or could be an installation of a new application somehow related to the present one. It is this programming code, when running, which will generate such signals using AT or Hayes commands. This upgrade can be easily performed either with a floppy disk or by a remote upgrading. It is therefore a cheap requirement for a very high benefit namely the possibility to set up fully automatically a telecommunications connection between a far end modem and a near end modem, latter connected to a PBX. This is specifically advantageous when the network 9 or the line on which the telecommunications connection will run, is at least in part still analog.

## Claims

1. Set up method for a telecommunications connection between a far end modem and a near end modem, latter being connected to a private branch exchange (PBX), said set up method comprising the following steps:
• starting an incoming call by dialing by said far end modem a phone number identifying at least one near end telecommunications device connected to said PBX;
• further sending to said PBX by said far end modem a signal specifying latter as being a modem, while said signal being **characterized in that** it is made of at least a code generated by AT or Hayes commands detectable by said PBX and that after being recognized by said PBX, said incoming call is automatically transferred to said near end telecommunications device being said near end modem to build said telecommunications connection between both modems.

2. Set up method for a telecommunications connection according to claim 1, **characterized in that** said signal is transferred at least some where between said far end modem and said near end modem in an analog way.

3. Set up method for a telecommunications connection according to claim 1, **characterized in that** said signal is made of a dual tone multi-frequency (DTMF) signal.

4. Set up method for a telecommunications connection according to claim 1, **characterized in that** said code is made of a number.

5. Set up method for a telecommunications connection according to claim 1, **characterized in that** said near end telecommunications device is said PBX itself such that said telecommunications connection is transferred to said near end modem being an internal modem of said PBX.

6. Far end modem containing a programming code generating signals to set up a telecommunications connection with a near end modem, latter being connected to a private branch exchange (PBX), while said programming code is adapted to generate a signal specifying said far end modem as being a modem, **characterized in that** said signal being made of at least a code generated by AT or Hayes commands.

7. Private branch exchange (PBX) containing a detector for detecting a signal in an incoming call started by a far end modem after dialing a phone number identifying at least one near end telecommunications device connected to said PBX while said signal, specifying said far end modem as being a modem, being **characterized in** to be made of at least a code generated by AT or Hayes commands and said PBX being set such that a recognition of said signal by said PBX is enabled and automatically activates a transfer of said incoming call to said near end telecommunications device being a modem to build a telecommunications connection between both modems.

8. Private branch exchange according to claim 7, **characterized in that** said PBX contains said near end modem being an internal modem to which is transferred said incoming call when said dialed near end telecommunications device corresponds to said PBX itself.

9. Private branch exchange according to claim 7, **characterized in that** said detector works in a similar way as when detecting direct inward signaling access (DISA).

10. Private branch exchange according to claim 7, **characterized in that** after being dialed by said far end modem, said PBX sends some message to said far end modem during which said detector will identify said far end modem as being a modem.
